# DEMANDE DE BREVET EUROPEEN

(11) **EP 0 734 907 A1**
(43) Date de publication de la demande: **02.10.1996**
(21) Numéro de dépôt: 96400666.2
(22) Date de dépôt: 28.03.1996
(51) Int. Cl.: B60R 16/02

(54) **Contacteur électrique tournant comprenant des moyens de détrompage au montage**

(30) Priorité: 31.03.1995 FR 9503830
(71) Demandeur: MAGNETI MARELLI FRANCE, F-92000 Nanterre (FR)
(72) Inventeur: Hallet, Michel, 14320 Clinchamps / Orne (FR)
(74) Mandataire: Texier, Christian

(57) **Abrégé**

La présente invention concerne un contacteur du type connu comprenant deux éléments (100, 200) susceptibles de rotation relative et un conducteur souple (300) placé entre ces deux éléments (100, 200), caractérisé par le fait qu'il comprend en outre un volet de détrompage (400) adapté pour imposer une position d'installation du contacteur sur une platine support, correspondant à une position relative unique entre lesdits deux éléments (100, 200) et des moyens (500, 510) d'entraînement à déplacement du volet de détrompage (400), actionnés par la rotation relative des deux éléments (100, 200).

## Description

La présente invention concerne le domaine des contacteurs électriques tournants.

Plus précisément, la présente invention concerne les contacteurs du type comprenant:
- un premier élément de boîtier fixe,
- un second élément de boîtier mobile à rotation par rapport au premier élément de boîtier fixe, et
- un organe conducteur électrique souple placé entre l'élément fixe et l'élément mobile du boîtier et relié à ceux-ci.

La présente invention trouve notamment, mais non exclusivement, application à la transmission de signaux électriques entre des moyens liés au volant d'un véhicule automobile, par exemple un système de gonflage de sac de protection type airbag et des moyens de commande indépendants du volant liés à la colonne de direction.

De nombreux contacteurs électriques tournants du type rappelé ci-dessus ont déjà été proposés.

On peut trouver par exemple un descriptif général de ces contacteurs dans les documents GB-A-869275, GB-A-2216476, US-A-3525536, FR-A-2494922, FR-A-2667457, US-A-4789342, US-A-4540223, FR-A-2667458, FR-A-2667456, FR-A-2477789, DE-A-751684, FR-A-2249458, GB-A-2164506, CH-A-167629, US-A-4422699, US-A-4836795, DE-A-3041258, US-A-4451105, US-A-3525536, US-A-4722690, US-A-4875860.

On a décrit en particulier dans le document FR-A-2667457 un dispositif de transmission de signaux du type précité comprenant deux cages respectivement externe et interne susceptibles de rotation relative et des moyens souples conducteurs de signal placés entre les deux cages, dans lequel le dispositif comprend un système d'indexage formé, d'une part d'un guide en spirale ménagé sur une première pièce, et d'autre part d'un doigt d'indexage engagé sur le guide en spirale et placé dans une fenêtre ménagée dans une seconde pièce susceptible de rotation par rapport à la première pièce, de sorte que le doigt d'indexage soit déplacé radialement par rapport à l'axe de rotation des pièces lorsque celles-ci sont entraînées à rotation relative.

Les moyens décrits dans ce document permettent de détecter la position relative médiane ou "point milieu" entre les deux éléments de base du contacteur, lorsqu'un index prévu sur le doigt d'indexage coïncide avec un index placé en regard sur ladite seconde pièce.

La présente invention a maintenant pour but de perfectionner les contacteurs électriques tournant connus.

Un but de la présente invention est en particulier de proposer un nouveau contacteur qui permette d'améliorer la précision de détection d'une position relative particulière, par exemple correspondant au point milieu, entre les deux éléments de base du contacteur.

Un autre but important de la présente invention est de proposer un nouveau contacteur qui impose une position relative unique d'installation, correspondant de préférence au point milieu, entre les deux éléments de base du contacteur.

Ce but est atteint selon la présente invention grâce à un contacteur du type connu comprenant deux éléments susceptibles de rotation relative et un conducteur souple placé entre ces deux éléments, caractérisé par le fait qu'il comprend en outre un volet de détrompage adapté pour imposer une position d'installation du contacteur sur une platine support, correspondant à une position relative unique entre lesdits deux éléments, et des moyens d'entraînement à déplacement du volet de détrompage, actionnés par la rotation relative des deux éléments.

Selon une autre caractéristique avantageuse de la présente invention, le volet de détrompage comprend un évidement positionné pour être placé en regard d'un oeillet de fixation lorsque lesdits deux éléments sont dans ladite position relative unique.

Selon une autre caractéristique avantageuse de la présente invention, le volet de détrompage est articulé à pivotement sur l'un des éléments et les moyens d'entraînement du volet de détrompage comprennent un guide spirale lié à l'autre élément et concentrique à l'axe de rotation relative des deux éléments et un index qui est d'une part articulé sur le volet de détrompage et d'autre part engagé dans le guide spirale.

Selon une autre caractéristique avantageuse de l'invention, le volet de détrompage est monté à déplacement à la fois à pivotement et à translation sur l'un des éléments. Dans le cadre de cette variante, l'autre élément est muni de préférence d'une cavité recevant une structure en forme de came liée au volet de détrompage, pour déplacer celui-ci hors de sa position de repos dès que le contacteur est écarté de sa position, dite position relative unique.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en perspective éclatée d'un contacteur conforme à la présente invention,
- la figure 2 représente une autre vue en perspective du même contacteur,
- la figure 3 représente une troisième vue en perspective du même contacteur, comparable à la figure 1, après rotation relative entre les deux éléments de base du contacteur,
- les figures 4, 5, 6 et 7 représentent des vues partielles du contacteur conforme à la présente invention, et plus précisément de son volet de détrompage, dans quatre positions relatives différentes des éléments de base du contacteur,
- la figure 8 représente une vue schématique similaire à la figure 3 d'un contacteur conforme à une autre variante de réalisation de l'inventions,
- la figure 9 représente une autre vue en perspective du contacteur conforme à cette variante selon une vue similaire à la figure 2, et
- les figures 10 à 14 représentent des vues partielles du contacteur conforme à cette variante de l'invention dans cinq positions relatives différentes des éléments de base du contacteur.

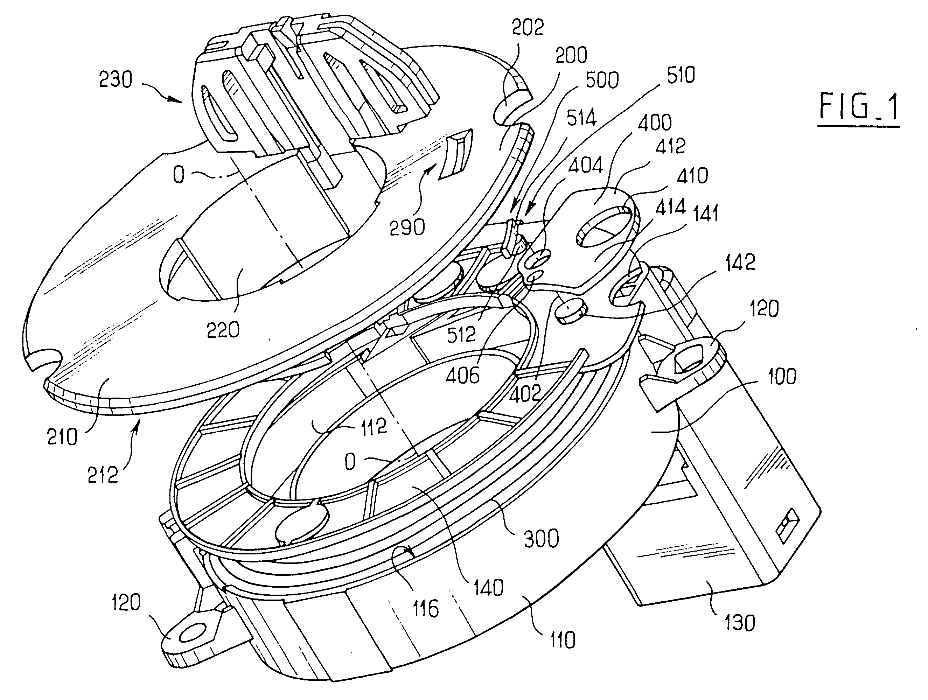

Le contacteur électrique tournant représenté sur les figures 1 et suivantes annexées comprend essentiellement un boîtier fixe 100, un couvercle rotatif 200, un conducteur souple 300, un volet de détrompage 400 et des moyens d'entraînement 500.

Le boîtier fixe 100 peut faire l'objet de nombreux modes de réalisation.

Il est formé, de préférence, par moulage en matière plastique.

Selon le mode de réalisation particulier et non limitatif représenté sur les figures annexées, le boîtier 100 comprend essentiellement deux parois circulaires concentriques 110, 112 reliées entre elles par une paroi de base 114 en forme de couronne. Les parois 110, 112 et 114 précitées, délimitent ainsi une chambre annulaire 116 apte à contenir le conducteur 300.

La paroi cylindrique externe 110 est pourvue de préférence de points de fixation 120 formés par exemple d'oeillets comme représenté sur les figures annexées.

En outre, la paroi cylindrique extérieure 110 est munie, de préférence sur sa périphérie extérieure, d'un corps de connecteur 130. Ce corps de connecteur 130 comprend des contacts électriques reliés respectivement à des pistes du conducteur souple 300. Le connecteur 130 s'étend avantageusement axialement, c'est-à-dire dans une direction générale parallèle à l'axe des parois 110, 112.

Selon le mode de réalisation préférentiel représenté sur les figures annexées, la cage cylindrique délimitée par les parois 110, 112 et 114 est complétée par une entretoise 140 en forme de couronne. Cette entretoise 140 est liée à rotation avec le boîtier 100. Elle obture partiellement le contour d'ouverture de la chambre annulaire 116 précitée.

L'entretoise 140 sert de plaque intermédiaire entre le boîtier formé par les parois 110, 112, 114 et le couvercle 200. Elle peut assurer par ailleurs diverses fonctions telles que support mécanique, support de contact électrique et/ou protection.

Le couvercle 200 comprend essentiellement une paroi 210 plane en forme de couronne, coaxiale au boîtier 100. La paroi 210 est munie sur sa périphérie interne d'un fût cylindrique 220, ou de différents segments cylindriques équi-répartis autour de son axe, comme représenté sur les figures annexées, engagé dans l'espace interne du boîtier 100. Ainsi le couvercle 200 est monté et guidé à rotation sur le boîtier 100.

Le couvercle 200 est retenu à translation sur le boîtier 100 par tout moyen approprié, par exemple à l'aide de dents 222 en saillie sur l'extrémité du fût 220 ou des segments composants ce fût 220, lesquelles dents 222 viennent en prise avec un décrochement 113 formé sur la paroi cylindrique 112.

De préférence, le couvercle 200 est muni également d'un corps de connecteur 230 au niveau de sa périphérie interne, sur sa face opposée au fût 220. Le corps de connecteur 230 s'étend dans une direction axiale, c'est-à-dire parallèlement à l'axe du couvercle 200 et du boîtier 100.

Le couvercle 200 est ainsi placé sur la face de l'entretoise 140 opposée à la chambre annulaire 116.

Sur sa face 212 adjacente à cette entretoise 140, le couvercle 200 est muni, selon la variante de réalisation préférentielle de l'invention, d'une rainure spiralée 250, c'est-à-dire une rainure en spirale centrée sur un axe coaxial à l'axe du boîtier 100 et du couvercle 200.

Le volet de détrompage 400 a pour fonction d'imposer une position d'assemblage ou d'installation unique du contacteur sur une platine support, correspondant à une position relative unique entre les deux éléments 100 et 200 composant respectivement le boîtier et le couvercle rotatif.

Cette platine support peut être formée d'une platine fixe liée aux véhicules, ou encore du volant, ou d'un élément lié en rotation au volant.

Selon le mode de réalisation préférentiel représenté sur les figures annexées, le volet de détrompage 400 est monté à pivotement sur l'entretoise 140.

Plus précisément, le volet de détrompage 400 est monté à pivotement sur l'entretoise 140 autour d'un axe 402 parallèle à l'axe de rotation 0-0 des deux éléments 100/200 et décalé par rapport à cet axe O-O.

A cette fin, le volet de détrompage 400 possède un trou cylindrique 404 engagé sur un tourillon complémentaire 142 solidaire de l'entretoise 140.

Bien entendu, la disposition inverse est possible, c'est-à-dire que le volet de détrompage 400 peut posséder un tourillon engagé dans un trou cylindrique complémentaire formé dans l'entretoise 140.

Comme on l'a mentionné précédemment, le volet de détrompage 400 est associé à des moyens 500 d'entraînement à déplacement, actionnés par la rotation relative des deux éléments 100/200.

Selon le mode de réalisation préférentiel représenté sur les figures annexées, ces moyens d'entraînement 500 comprennent un index 510 coopérant avec la rainure spiralée 250 précitée ménagée dans le couvercle 200.

Plus précisément, l'index 510 comprend un tourillon cylindrique 512 solidaire d'un segment de spirale 514.

Le tourillon 512 est engagé dans un trou cylindrique complémentaire 406 formé dans le volet de détrompage 400. Le trou 406 est excentré par rapport au trou 404 précité.

Le segment de spirale 514 solidaire du tourillon 512 est quant à lui engagé dans la rainure spiralée 250.

Cette rainure spiralée 250 comprend un nombre de tours égal au nombre de tours de rotation souhaité pour le volant du véhicule, c'est-à-dire le nombre de tours nécessaire entre le boîtier 100 et le couvercle 200.

Les extrémités respectives de la rainure spiralée 250 forment par ailleurs deux butées pour l'index 510.

Le volet 400 comprend en outre de préférence un évidement 410, par exemple cylindrique, positionné par rapport à un oeillet 120 lié à la paroi cylindrique externe 110 du boîtier 100, pour être placé en regard de cet oeillet 120 uniquement lorsque les deux éléments 100, 200 sont dans ladite position relative unique.

Le fonctionnement des moyens de détrompage conformes à la présente invention est essentiellement le suivant.

Lorsque les deux éléments 100, 200 sont entraînés à rotation relative autour de l'axe O-O, l'index 510 engagé par son segment 514 dans la rainure spiralée 250 est déplacé en synchronisme.

Il en résulte qu'en raison de l'engagement défini entre le tourillon 512 de l'index 510 et le trou 406 du volet 400, ce volet de détrompage 400 est également déplacé à pivotement en synchronisme autour de son axe 402.

Il existe donc une seule position d'alignement entre l'évidement 410 du volet de détrompage 400 et l'oeillet de fixation 120, en fonction de la position relative du boîtier 100 et du couvercle rotatif 200.

En conséquence, il existe également une seule position de montage ou de démontage possible du contacteur sur sa platine support.

Ainsi, la présente invention permet de monter et démonter le contacteur sur sa platine support, sans risque de perte de la position point milieu du contacteur. L'invention facilite ainsi les opérations de maintenance par rapport aux systèmes proposés antérieurement.

De préférence, la position dite relative unique entre les deux éléments 100, 200 correspond à la position point milieu du contacteur. Cependant, en variante il peut s'agir d'une autre position relative, sous réserve que celle-ci soit connue avec précision.

La dimension de l'évidement 410 formée dans le volet de détrompage 400 est de préférence adaptée pour interdire le passage d'une des vis de fixation dans l'oeillet 120, ou encore des moyens de vissage eux-mêmes, lorsque l'axe de l'évidement 410 n'est pas pratiquement aligné avec l'axe de l'oeillet 120.

De préférence, le volet de détrompage 400 est muni de joues latérales 412, 414 respectivement de part et d'autre de l'évidement 410, lesquelles joues 412, 414 sont superposées à l'oeillet de fixation 120 lorsque les éléments 100, 200 sont éloignés de ladite position relative unique autorisant le montage du contacteur.

De préférence, le contacteur comprend également des découpes 202, 141, débouchant radialement sur l'extérieur du couvercle 200 et du boîtier 100, par exemple sur l'entretoise 140, lesquelles découpes 202, 141 sont conçues pour être placées en regard de l'oeillet de fixation 120.

Plus précisément, la découpe 141 formée sur l'entretoise 140 liée à rotation avec le boîtier 100 est placée en permanence en regard de l'oeillet de fixation 120.

En revanche, la découpe 202 formée sur le couvercle 200 n'est alignée sur l'oeillet de fixation 120 qu'une fois par rotation du couvercle 200 sur 360°.

Selon une autre caractéristique avantageuse de la présente invention, le couvercle 200 généralement opaque est muni en outre d'une fenêtre 290.

Cette fenêtre 290 est dimensionnée et positionnée sur le couvercle 200 de telle sorte qu'elle soit rigoureusement alignée avec le segment de spirale 514 lié à l'index 510 lorsque les éléments 100, 200 du contacteur sont placés dans une position prédéterminée, avantageusement la position point milieu.

L'homme de l'art comprendra aisément que l'index 514 n'est aligné sur la fenêtre 290 que dans une position relative unique entre les éléments 100 et 200.

Ainsi la présente invention permet de garantir la position d'installation du contacteur sur la colonne de direction et/ou sur le volant.

la fenêtre 290 peut être formée d'un évidement ou lumière dans le couvercle opaque 200 ou encore d'un hublot en matériau optiquement transparent, par exemple en matière plastique.

Le couvercle 200 et l'entretoise 140, ainsi que le volet de détrompage 400 et l'index 510 sont formés avantageusement par moulage en matière plastique comme le boîtier 100.

La fenêtre 290 formée dans le couvercle 200 présente de préférence une section en forme de secteur de couronne de même contour que le segment 514.

Le conducteur souple 300 peut faire l'objet de nombreux modes de réalisation. Il peut s'agir par exemple d'un faisceau de fils électriquement conducteurs isolés, ou encore de préférence d'un circuit imprimé ou d'un film plastique souple pourvu de plusieurs pistes métallisées parallèles.

Les extrémités du conducteur souple 300 sont reliées respectivement aux contacts électriques placés dans le corps de connecteur 130 et aux contacts électriques placés dans le corps de connecteur 230.

Bien entendu on peut prévoir à l'inverse des dispositions précédemment décrites un volet de détrompage 400 monté à pivotement sur le couvercle 200 et une glissière en spirale formée sur l'entretoise 140 ou le boîtier 100 pour recevoir l'index 510.

Le fonctionnement du contacteur conforme à la présente invention est pour le reste classique.

Lorsque le volant du véhicule automobile est entraîné en rotation autour de son axe, le couvercle 200 est entraîné à rotation par rapport au boîtier 100.

Au cours de ce pivotement, les spires du conducteur souple 300 se desserrent ou se resserrent en fonction du sens du rotation du volant, mais le conducteur 300 assure en permanence une liaison électrique entre les contacts intégrés aux connecteurs 130 et 230. Ainsi, le conducteur 300 assure une liaison électrique permanente entre des modules liés au volant et des modules liés à la colonne de direction ou d'une façon plus générale au véhicule.

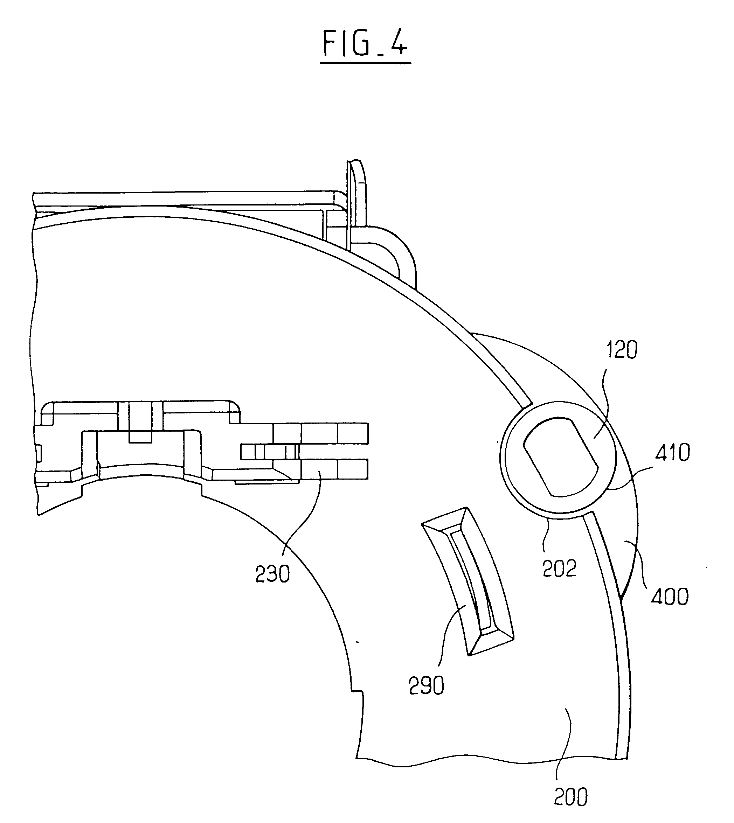

On a représenté sur les figures 4 et suivantes la position du volet de détrompage 400 par rapport au boîtier 100, respectivement en position point milieu du contacteur, après un tour de rotation du couvercle 200, après deux tours de rotation du couvercle 200, et après 2,5 tours de rotation du même couvercle 200. Les figures 4 et suivantes montrent clairement que le volet de détrompage 400 masque au moins partiellement l'oeillet de fixation 120 dès lors que le contacteur est écarté de sa position point milieu.

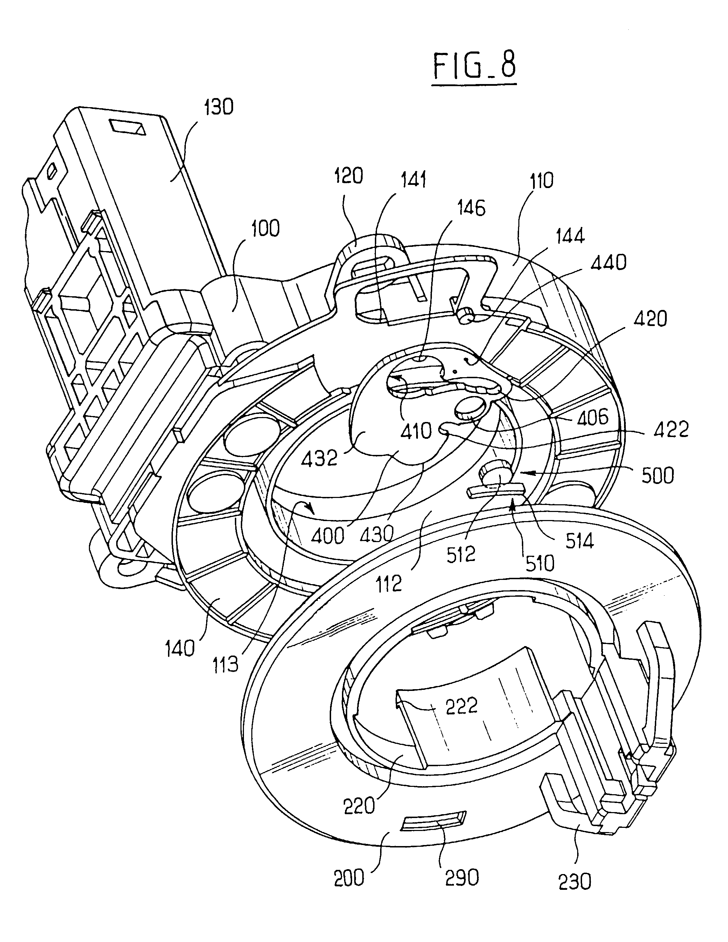

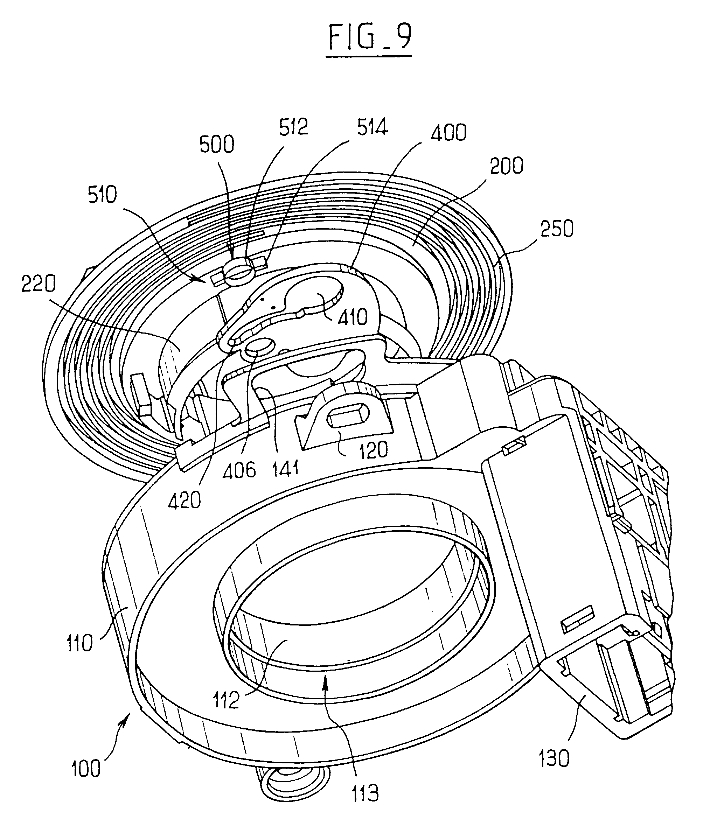

On va maintenant décrire la variante de réalisation de l'invention représentée sur les figures 8 à 14.

On retrouve sur ces figures 8 à 14 un contacteur électrique tournant comprenant un boîtier fixe 100, un couvercle rotatif 200, un conducteur souple 300, un volet de détrompage 400 et des moyens d'entraînement 500. Pour cette raison, la structure générale de la variante illustrée sur les figures 8 à 14 ne sera pas décrite dans le détail par la suite.

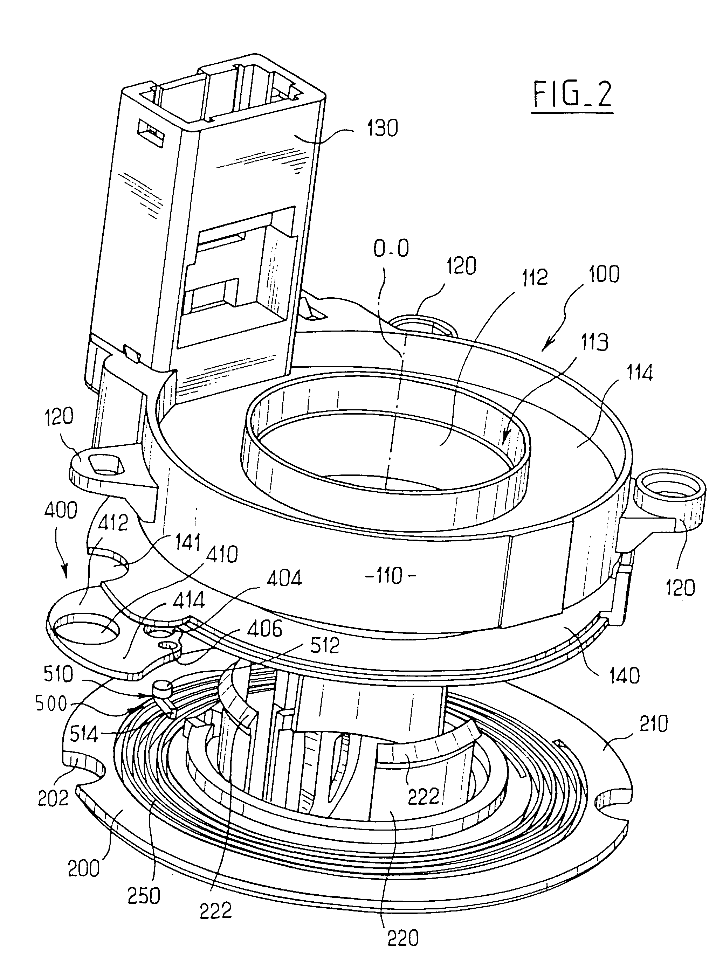

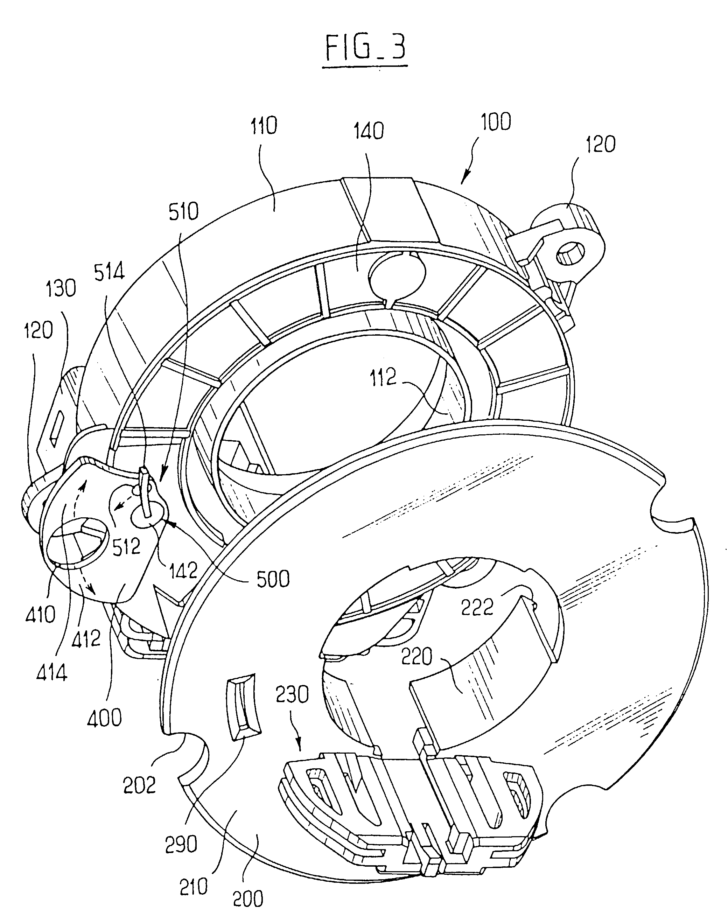

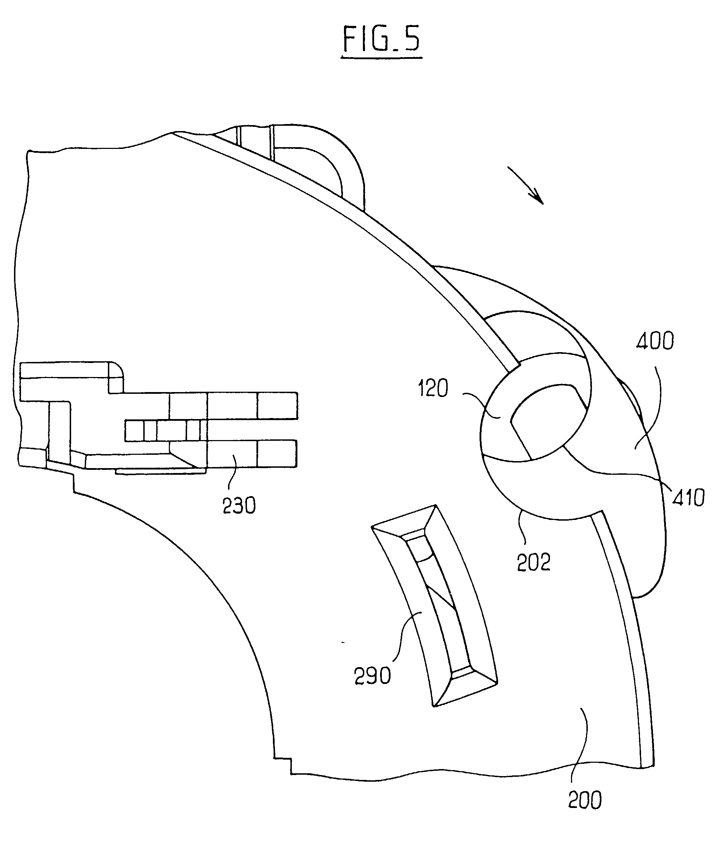

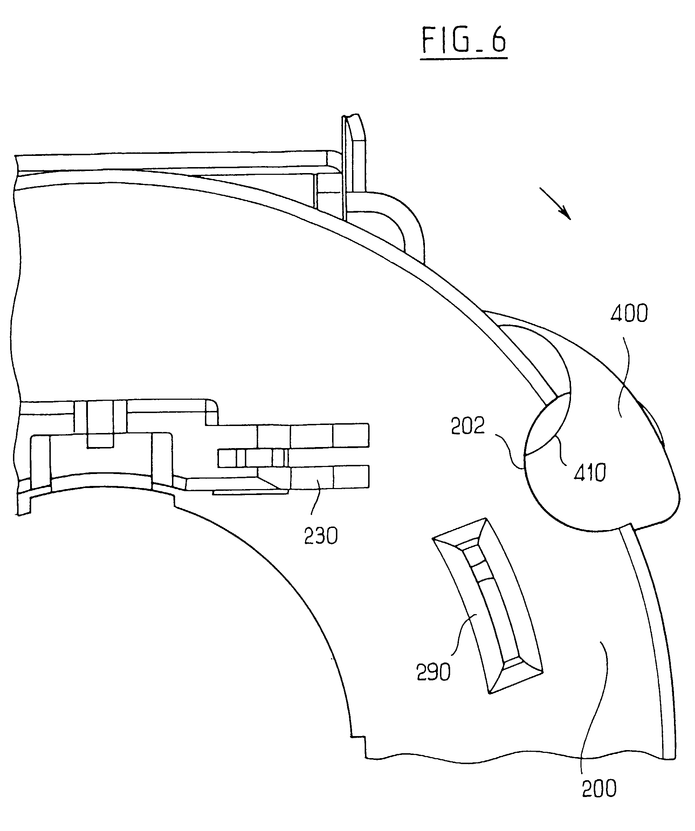

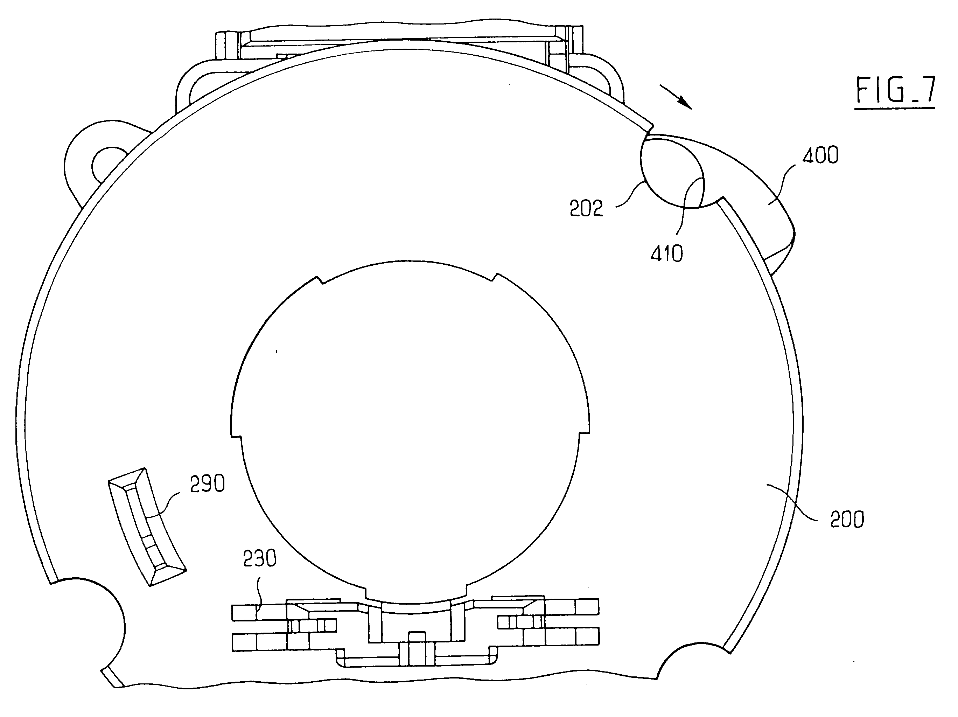

On s'attachera essentiellement à décrire les différences structurelles existant entre le volet de détrompage 400 représenté sur les figures 8 à 14 et celui du premier mode de réalisation représenté sur les figures 1 à 7, ainsi que les différences entre les moyens d'entraînement 500 de ces volets de détrompage 400.

Les éléments de la variante de réalisation représentée sur les figures 8 à 14 similaires à des moyens représentés et décrits précédemment en regard des figures 1 à 7 porteront des références numériques identiques.

Selon la variante de réalisation représentée sur les figures 8 à 14, l'entretoise 140 servant de support d'index 510, et liée en rotation au boîtier 100 est munie de deux tourillons 144, 146 et d'un dégagement 141 implanté au droit de la fixation choisie 120.

Le volet de détrompage 400 est muni de deux zones guide 420, 422 coopérant respectivement avec les tourillons 144, 146, d'un trou cylindrique 406 le liant à l'index 510, en rotation, d'un évidement 410 aligné dans la position dite position relative unique avec le dégagement 141 et la fixation choisie 120, d'une structure en forme de came 430 en saillie sur sa périphérie extérieure, d'une joue 432 adjacente à l'évidement 410 et d'un orifice 440 assurant la fixation d'une extrémité d'un ressort de rappel (non représenté sur les figures pour simplifier l'illustration).

La première zone guide 420 coopérant avec le tourillon 144, est formée d'une gorge incurvée qui débouche dans l'évidement 410.

La seconde zone guide 422 qui coopère avec le tourillon 146, est formée d'une gorge également incurvée qui débouche sur l'extérieur du volet 400, par exemple entre la came 430 et le trou 406.

La largeur des gorges 420, 422 est adaptée au diamètre extérieur des tourillons 144, 146, pour autoriser un déplacement relatif entre ceux-ci.

La gorge 420 est centrée sur un axe qui coïncide avec le centre de la gorge 422, plus précisément avec l'axe du tourillon 146 lorsque celui-ci est placé dans ladite gorge 422.

De même de préférence, la gorge 422 est centrée sur l'axe du tourillon 144 lorsque celui-ci est placé dans l'extrémité de la gorge 420 la plus éloignée de l'évidement 410.

De façon comparable au premier mode de réalisation représenté sur les figures 1 à 7, l'index 510 comprend un tourillon cylindrique 512 engagé avec liberté de pivotement relatif dans le trou 406 du volet de détrompage 400 et un segment de spirale 514 engagé dans la rainure spiralée 250 du couvercle 200.

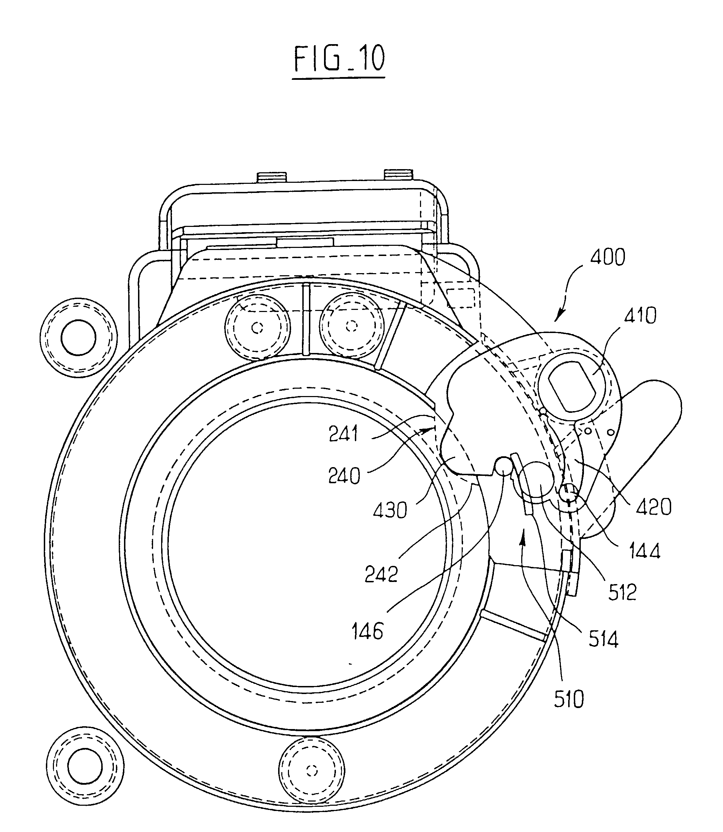

Le couvercle 200 est muni selon la variante de réalisation des figures 8 à 14, sur la surface extérieure de son fût cylindrique 220, d'une cavité ou logement 240 recevant la structure de came 430 en position de montage du contacteur qui correspond de préférence à la position point milieu du contacteur. L'engagemènt de la structure de came 430 dans la cavité 240 est illustré notamment sur la figure 10.

Un ressort de rappel en prise avec l'entretoise 140 et le volet de détrompage 400 (lequel ressort n'est pas illustré sur les figures annexées pour simplifier l'illustration) sollicite le volet de détrompage 400 dans le sens contraire des aiguilles d'une montre en référence aux figures 10 à 14.

Le fonctionnement de la variante de réalisation représenté sur les figures 8 à 14, est essentiellement le suivant.

En position point milieu, l'index 510 est positionné par sa forme spiralée 514 dans la spire médiane de la rainure spiralée 250 du couvercle 200. La came 430 solidaire du volet de détrompage 400 est engagée dans le logement 240 du couvercle 200. L'évidement 410 est aligné sur la fixation 120.

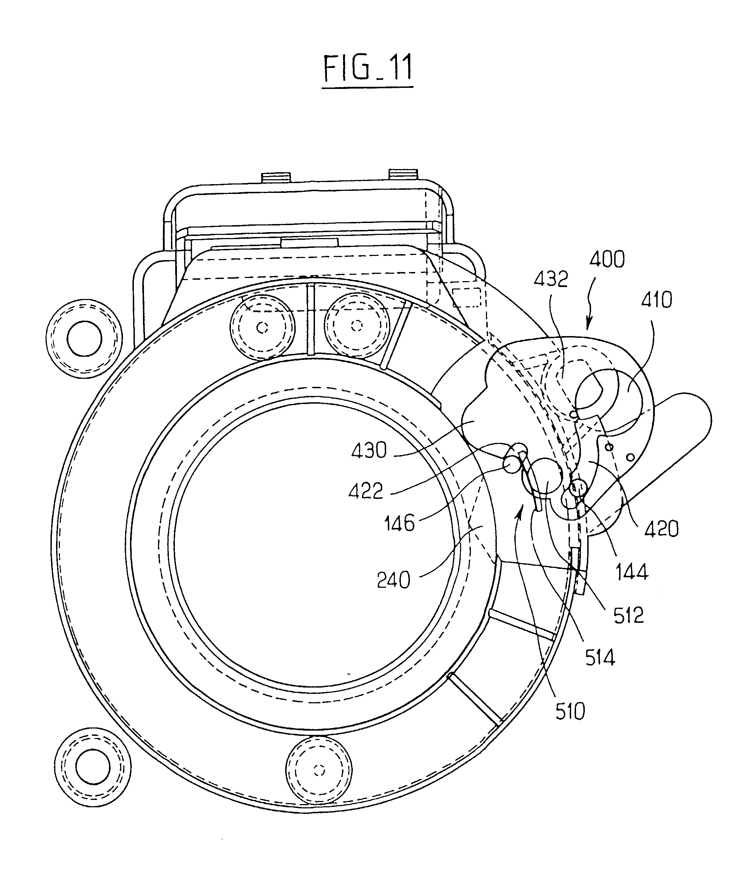

Comme on le voit à l'examen comparé des figures 10 et 11, lors d'une faible rotation relative du couvercle 200 par rapport au boîtier 100 (par exemple plus ou moins 30°) à partir de cette position point milieu, la structure de came 430 solidaire du volet de détrompage 400 glisse sur les flancs inclinés 241, 242 du logement 240, de sorte que la structure de came 430 sort de ce logement 240 et le volet de détrompage 400 pivote (dans le sens des aiguilles d'une montre en référence aux figures 10 à 14) autour de l'axe du tourillon 512. La structure de came 430 prend alors appui sur la surface extérieure du fût 220. Suite à cette rotation, l'évidement 410 est désaligné de la fixation 120 et masque l'accès à cette dernière.

On note à l'examen comparé des figures 10 et 11 que ce pivotement du volet de détrompage 400 autour de l'axe du tourillon 512 entraîne un déplacement relatif entre les tourillons 144, 146, et les gorges 420, 422, associées.

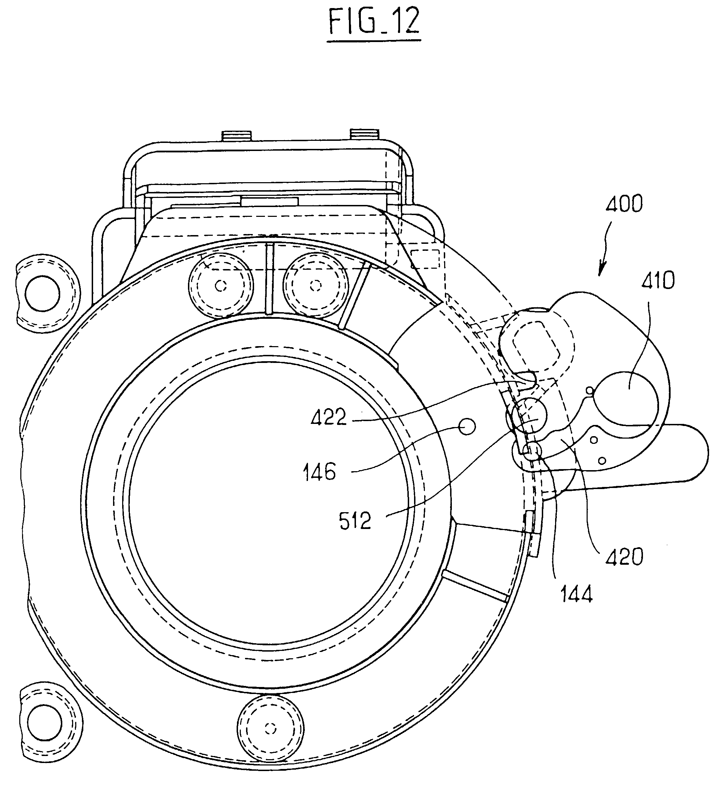

Lorsque la rotation relative entre le couvercle 200 et le boîtier 100 est accentuée, jusqu'à un tour, le volet de détrompage 400 reste en appui contre le fût 220 par sa structure de came 430. Cependant, l'index 512 se déplace grâce à l'engagement du segment de spirale 514 dans la rainure spiralée 250 du couvercle. Ce déplacement de l'index 510 provoque un mouvement complexe, généralement radialement vers l'extérieur, du volet de détrompage 400, jusqu'à ce que le tourillon 144 vienne en appui contre le fond de la gorge 420 le plus éloigné de l'évidement 410. Lors d'une rotation supérieure (rotation relative entre le couvercle 200 et le boîtier 100 supérieure à un tour), l'index 510 entraîne le volet de détrompage 400 à rotation autour de l'axe du tourillon 144 (voir figure 12).

L'homme de l'art comprendra que grâce à ce principe, d'une part la coopération définie entre la came 430 et le logement 240 entraîne un déplacement rapide du volet de détrompage 400 avec une faible course relative entre le couvercle 200 et le boîtier 100 et, d'autre part grâce au basculement ultérieur du volet de détrompage 400 imposé par l'index 510, la came 430 ne peut retomber dans le logement 240 au passage du premier tour.

On a représenté sur la figure 12, le volet de détrompage 400 dans la position occupée après rotation maximum entre le couvercle 200 et le boîtier 100.

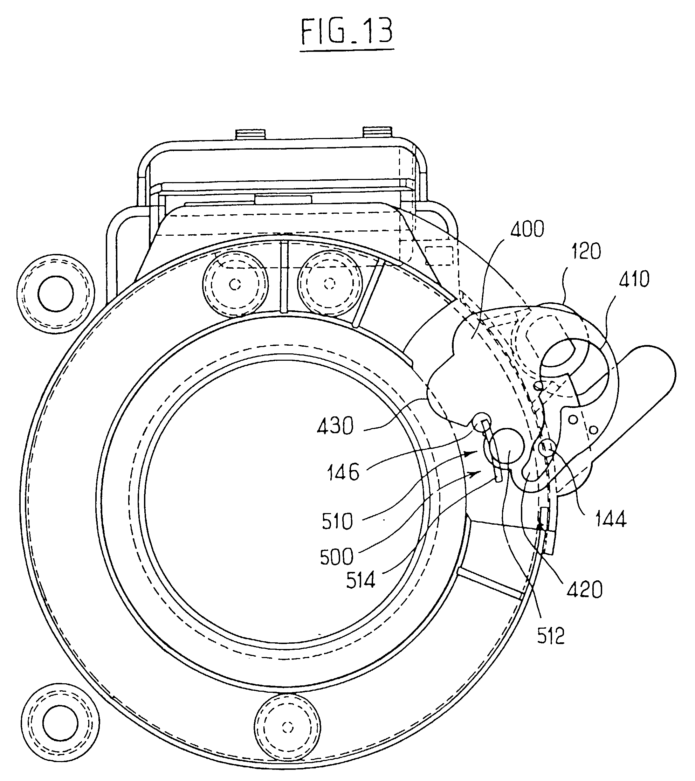

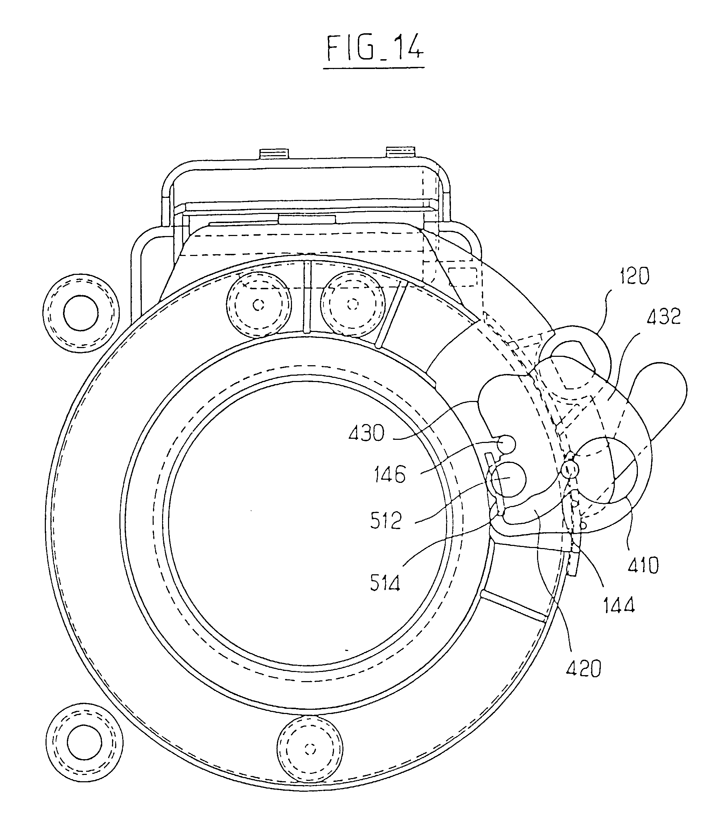

Lors d'une rotation en sens inverse du couvercle 200 par rapport au boîtier 100, à partir de la position point milieu,un effet identique est obtenu, le volet de détrompage 400 pivotant cette fois autour de l'axe du tourillon 146, avec déplacement simultané du tourillon 144 dans la gorge 420, comme on l'a représenté sur les figures 13 et 14 respectivement à un tour de rotation relative entre le couvercle 200 et le boîtier 100, et à rotation maximum entre ceux-ci.

On notera qu'à partir d'une position point milieu, quel que soit le sens de rotation du couvercle 200 par rapport au boîtier, le volet de détrompage 400 tourne toujours dans le même sens.

L'homme de l'art comprendra que la variante de réalisation représentée sur les figures 8 à 14 permet de réduire les dimensions extérieures du contacteur à sécurité de recouvrement similaire des moyens de fixation 120.

Ainsi, la variante de réalisation représentée sur les figures 8 à 14 facilite l'intégration du contacteur dans un bloc ou platine support.

Pour le reste, la variante de réalisation du contacteur représentée sur les figures 8 à 14 autorise les mêmes variantes que celles envisagées pour le premier mode de réalisation représenté sur les figures 1 à 7.

En particulier, l'index 510 peut être adapté pour être aligné sur une fenêtre de visualisation 290 en point milieu du contacteur ; et le volet de détrompage 400 peut être monté à pivotement sur le couvercle 200, la glissière en spirale étant formée sur l'entretoise 140 ou le boîtier 100 pour recevoir l'index 510.

Bien entendu la présente invention n'est pas limitée au mode de réalisation particulier qui vient d'être décrit mais s'étend à toute variante conforme à son esprit.

Ainsi par exemple, on peut prévoir des variantes de réalisation selon lesquelles la fenêtre de détection 290 est formée sur la partie fixe, c'est-à-dire sur le corps de boîtier 100 ou encore sur l'entretoise 140, sous réserve que cette fenêtre soit observable par l'utilisateur, et non point sur la partie mobile ou couvercle 200.

## Revendications

1. Contacteur du type connu comprenant deux éléments (100, 200) susceptibles de rotation relative et un conducteur souple (300) placé entre ces deux éléments (100, 200), caractérisé par le fait qu'il comprend en outre un volet de détrompage (400) adapté pour imposer une position d'installation du contacteur sur une platine support, correspondant à une position relative unique entre lesdits deux éléments (100, 200) et des moyens (500, 510) d'entraînement à déplacement du volet de détrompage (400), actionnés par la rotation relative des deux éléments (100, 200).

2. Contacteur selon la revendication 1, caractérisé par le fait que le volet de détrompage (400) comprend un évidement (410) positionné pour être placé en regard d'un oeillet de fixation (120) lorsque lesdits deux éléments (100, 200) sont dans ladite position relative unique.

3. Contacteur selon l'une des revendications 1 ou 2, caractérisé par le fait que le volet de détrompage (400) est articulé à pivotement sur l'un (100, 140) des éléments et les moyens (500, 510) d'entraînement du volet de détrompage (400) comprennent un guide spirale (250) lié à l'autre élément (200) et concentrique à l'axe de rotation relatif des deux éléments (100, 200) et un index (510) qui est d'une part articulé sur le volet de détrompage (400) et d'autre part engagé dans le guide spirale (250).

4. Contacteur selon l'une des revendications 1 à 3, caractérisé par le fait que le volet de détrompage (400) est monté à déplacement à pivotement et à coulissement sur l'un (100, 140) des éléments.

5. Contacteur selon l'une des revendications 1 à 4, caractérisé par le fait que le volet de détrompage (400) est monté à pivotement sur une entretoise (140) liée à rotation au boîtier (100).

6. Contacteur selon l'une des revendications 1 à 5,caractérisé par le fait que les moyens (500, 510) d'entraînement du volet de détrompage (400) comprennent un segment de spirale (514) engagé dans un guide spirale (250) lié à l'un des deux éléments (100, 200) et un tourillon (512) engagé dans un trou complémentaire formé dans le volet de détrompage (400).

7. Contacteur selon l'une des revendications 1 à 6, caractérisé par le fait que le volet de détrompage (400) est muni d'au moins une joue (432) adjacente à un évidement (410), adaptée pour recouvrir un moyen de fixation (120) lorsque les deux éléments (100, 200) sont écartés de leur position relative unique.

8. Contacteur selon l'une des revendications 1 à 7, caractérisé par le fait que le volet de détrompage (400) comprend des joues (412, 414) respectivement de part et d'autre d'un évidement (410), pour recouvrir un oeillet de fixation (120) lorsque les deux éléments (100, 200) sont écartés de leur position relative unique.

9. Contacteur selon l'une des revendications 1 à 8, caractérisé par le fait qu'il comprend en outre au moins une découpe (202, 141) dans l'un au moins des éléments (100, 200), laquelle découpe (141, 202) est positionnée en regard d'un oeillet de fixation (120), au moins dans une position relative des éléments (100, 200).

10. Contacteur selon l'une des revendications 1 à 9, caractérisé par le fait qu'il comprend en outre une fenêtre (290) sur l'un des deux éléments (100, 200), positionnée pour coïncider avec un index (510) engagé dans un guide spirale (250) formé dans l'un des deux éléments (100, 200) dans une position relative prédéterminée de ceux-ci.

11. Contacteur selon l'une des revendications 1 à 10, caractérisé par le fait que le volet de détrompage (400) est monté à déplacement sur l'un (100) des éléments et par le fait qu'il comprend un organe élastique qui sollicite le volet de détrompage vers l'autre élément (200).

12. Contacteur selon la revendication 11, caractérisé par le fait que ledit autre élément possède un logement (240) dans sa surface en regard du volet de détrompage (400) et par le fait que ce dernier possède une structure de came (430) apte à reposer dans le logement (240) en position relative unique.

13. Contacteur selon l'une des revendications 1 à 12, caractérisé par le fait que le volet de détrompage (400) est monté à déplacement sur un élément (100) qui possède deux tourillons (144, 146) engagés respectivement dans des zones dites (420, 422) formées dans le volet de détrompage (400).

14. Contacteur selon la revendication 13, caractérisé par le fait que l'une au moins des zones guide (420) est incurvée et débouche dans un évidement (410) formé dans le volet de détrompage (400).

15. Contacteur selon l'une des revendications 13 ou 14, caractérisé par le fait que l'une au moins des zones guide (422) est formée d'une gorge qui débouche sur l'extérieur du volet de détrompage (400).

16. Contacteur selon l'une des revendications 13 à 15, caractérisé par le fait que la largeur des zones guide (420, 422) est complémentaire de celles des tourillons (144, 146) pour autoriser un déplacement relatif entre ceux-ci.

17. Contacteur selon l'une des revendications 13 à 16, caractérisé par le fait que l'une au moins des zones guide est formée d'une gorge incurvée centrée sur l'axe d'un tourillon (146, 144) placé dans l'autre zone guide (422, 420).

18. Contacteur selon l'une des revendications 1 à 17, caractérisé par le fait qu'il est intégré dans un bloc ou platine support.

19. Contacteur selon l'une des revendications 1 à 18, caractérisé par le fait que le volet de détrompage (400) est monté à pivotement sur le boîtier (100) et coopère avec des moyens d'entraînement comprenant un index (510) engagé dans un guide spirale (250) formé dans le couvercle (200).

20. Contacteur selon l'une des revendications 1 à 18, caractérisé par le fait que le volet de détrompage (400) est monté à pivotement sur le couvercle (200) et coopère avec des moyens d'entraînement comprenant un index (510) engagé dans un guide spirale (250) formé sur le boîtier (100).
